# EUROPÄISCHE PATENTSCHRIFT

(11) **EP 4 356 490 B1**
(45) Veröffentlichungstag und Bekanntmachung des Hinweises auf die Patenterteilung: **30.04.2025**
(21) Anmeldenummer: 22747628.0
(22) Anmeldetag: 05.07.2022
(51) Int. Cl.: H01T 15/00, H01T 4/06, H01T 1/14, H02H 9/06, H01T 2/02, H01T 4/12, H01T 4/14, H02H 9/04

(54) **ÜBERSPANNUNGSSCHUTZ-FUNKENSTRECKENANORDNUNG UND VERFAHREN ZUM BETREIBEN EINER ÜBERSPANNUNGSSCHUTZ-FUNKENSTRECKENANORDNUNG**
OVERVOLTAGE PROTECTION SPARK GAP ASSEMBLY AND METHOD FOR OPERATING AN OVERVOLTAGE PROTECTION SPARK GAP ASSEMBLY
ENSEMBLE ÉCLATEUR DE PROTECTION CONTRE LES SURTENSIONS ET PROCÉDÉ DE FONCTIONNEMENT D'ENSEMBLE ÉCLATEUR DE PROTECTION CONTRE LES SURTENSIONS

(30) Priorität: 27.07.2021 DE 102021208076
(43) Veröffentlichungstag der Anmeldung: 24.04.2024
(73) Patentinhaber: DEHN SE, 92318 Neumarkt i.d. OPf. (DE)
(72) Erfinder: KRAUSS, Bernhard, 92318 Neumarkt i.d. Opf. (DE); LANG, Christian, 92318 Neumarkt i.d. Opf. (DE); HAAS, Sebastian, 92318 Neumarkt i.d. Opf. (DE); EICHENSEER, Roland, 92318 Neumarkt i.d. Opf. (DE); KLOSE, Juliane, 92318 Neumarkt i.d. Opf. (DE); DAUM, Richard, 92318 Neumarkt i.d. Opf. (DE)
(74) Vertreter: Isarpatent
(86) Internationale Anmeldenummer: PCT/EP2022/068581
(87) Internationale Veröffentlichungsnummer: WO 2023/006355

(56) Entgegenhaltungen:
- WO-A1-2009/050148
- WO-A1-2015/028436
- WO-A1-2020/148000
- DE-B3- 102019 210 234

## Beschreibung

Die vorliegende Erfindung betrifft eine Überspannungsschutz-Funkenstreckenanordnung und ein Verfahren zum Betreiben einer Überspannungsschutz-Funkenstreckenanordnung.

### Stand der Technik

Eine Überspannungsschutz-Funkenstrecke, welche das Hartgasprinzip zur Erzeugung eines hohen Druckes zur Folgestromvermeidung bzw. Löschung nutzt, ist aus der DE 10 2005 024 658 B4 bekannt. Als hartgasabgebender Stoff wird beispielsweise POM (Polyoxymethylen) verwendet. Derartige Überspannungsschutz-Funkenstrecken unterliegen einem Verschleiß bei Lichtbogenbelastungen. Übersteigt der Verschleiß des hartgasabgebenden Stoffes eine gewisse Grenze sinkt das Vermögen zur Löschung des Folgestromes.

Die DE 10 2011 051 738 A1 offenbart eine Überspannungsschutz-Funkenstrecke mit divergierenden Elektroden, wobei der Abstand der gegenüberliegenden Elektrodenflächen im Zündbereich eng gehalten ist und sich im Laufbereich aufweitet. Die Impulsstrombelastung begrenzt sich daher im Wesentlichen auf den Zündbereich, während die Netzfolgeströme im Laufbereich die divergierenden Elektroden entlanglaufen und der Netzfolgestrom-Lichtbogen in einer Löschkammer aufgeteilt und gelöscht wird.

Die WO 2015/028436 A1 beschreibt eine Funkenstrecke mit einem Alterungsdetektor, wobei die Funkenstrecke eine erste Entladungselektrode und eine hierzu beabstandete zweite

Entladungselektrode aufweist, zwischen denen sich bei Erreichen einer bestimmten Spannung eine Lichtbogenentladung entlang der Entladungsstrecke zwischen der ersten Entladungselektrode und der zweiten Entladungselektrode ausbildet. Die Entladungsstrecke ist zumindest abschnittsweise von einem elektrisch isolierenden Stoff umgeben ist, wobei der elektrisch isolierende Stoff an zumindest einer Stelle einen elektrisch leitfähigen Abschnitt aufweist, wobei der elektrisch leitfähige Abschnitt durch Einwirkung von Lichtbogenentladungen beschädigt wird und mittels einer Messung des Durchflusses oder des Widerstandes oder der Kapazität des elektrisch leitfähigen Abschnitts die Alterung der Funkenstrecke bestimmt werden kann.

Aus der WO 2020/148000 A1 ist weiterhin eine Überspannungsschutzanordnung bekannt, wobei in einem Gehäuse eine Hörnerfunkenstrecke mit einer Kammer zur Lichtbogenlöschung angeordnet ist, wobei im Zündbereich der Hörnerfunkenstrecke eine Triggerelektrode vorgesehen ist. Ein Abtrennelement kann eine Verbindung einer Triggerschaltung zur Triggerelektrode unterbrechen und somit die Triggerelektrode abtrennen, wobei das Abtrennelement von einer Bewertungseinheit, welche einer netzfolgestrom-bedingten Belastung unterliegt und auf diese reagiert, ausgelöst oder gesteuert wird. Die WO2020/14800 A1 zeigt weiterhin eine Anordnung bei der die Hörnerfunkenstrecke mit einer weiteren Funkenstrecke in Reihe geschaltet ist. Eine weitere Abtrennvorrichtung der Überspannungsschutzanordnung vom Versorgungsnetz ist jedoch nicht vorgesehen.

Üblicherweise ist einer Funkenstrecke als SPD (Surge Protection Device) eine (Schmelz-) Sicherung als separate Komponente vorgeschaltet, die bei versagendem bzw. verschlissenem SPD den Netzfolgestrom unterbrechen kann. Die (Schmelz-)Sicherung und das SPD können in demselben Gehäuse untergebracht sein. Dabei ergeben sich folgende Nachteile:
(1) Um ein entsprechendes Ableitvermögen (8/20, 10/350) zu gewährleisten, muss die vorgelagerte (Schmelz-)Sicherung entsprechend groß gewählt werden, was im Fehlerfall große Netzfolgeströme und somit eine hohe Belastung der Anlage mit sich bringt.
(2) Wenn das verbrauchte SPD eine gewisse Impedanz darstellt und den Strom noch ein wenig begrenzt, kann es sein, dass die vorgeschaltete (Schmelz-)Sicherung (stark) verzögert auslöst, was zu einer hohen thermischen Beanspruchung der verbauten Teile führen kann. Außerdem kann ein Ableiter derart altern, dass er den Netzfolgestrom begrenzt, aber nicht auslöschen kann. In diesem Fall kann es zu einer hohen thermischen Belastung des gesamten Strompfades kommen.
(3) Die Dimensionierung der Leiterquerschnitte muss entsprechend der bei (1) und (2) genannten Belastungen auf hohe Ströme ausgelegt werden.

### Offenbarung der Erfindung

Die vorliegende Erfindung schafft eine Überspannungsschutz-Funkenstreckenanordnung nach Anspruch 1 und ein Verfahren zum Betreiben einer Überspannungsschutz-Funkenstreckenanordnung nach Anspruch 11.

Bevorzugte Weiterbildungen sind Gegenstand der jeweiligen Unteransprüche.

### Vorteile der Erfindung

Der Kern der Erfindung ist die Überwachung der Reduzierung der Funktionsfähigkeit von Überspannungsschutz-Funkenstrecken, beispielsweise durch Alterung bzw. Überlastung, zur rechtzeitigen Abtrennung, beispielsweise durch Triggern einer Schmelzsicherungseinrichtung oder einer mechanischen Schaltereinrichtung.

Die der vorliegenden Erfindung zugrundeliegende Idee liegt im Erfassen eines bestimmten Verschleißgrades der ersten Überspannungsschutz-Funkenstrecke mittels einer ersten elektrisch leitfähigen Sondeneinrichtung, welche in ein Verschleißteil der ersten Überspannungsschutz-Funkenstrecke derart eingeführt ist, dass bei dem bestimmten Verschleißgrad die erste elektrisch leitfähige Sondeneinrichtung mit einem Lichtbogen in der ersten Überspannungsschutz-Funkenstrecke elektrisch in Kontakt tritt, als ein erstes Kriterium; Erfassen eines Einlaufens eines Lichtbogens in die zweite Überspannungsschutz-Funkenstrecke mittels einer zweiten elektrisch leitfähigen Sondeneinrichtung, welche mit einem Lichtbogen in der zweiten Überspannungsschutz-Funkenstrecke elektrisch in Kontakt tritt, als ein zweites Kriterium; und Abtrennen des ersten Anschlusskontakts von dem ersten Hauptanschluss und/oder Abtrennen des zweiten Anschlusskontakts von dem vierten Hauptanschluss, falls beide vom ersten und zweiten Kriterium erfüllt sind.

Gemäß einer bevorzugten Ausführungsform weist die erste Überspannungsschutz-Funkenstrecke als Verschleißteil in mindestens einem Bereich einen hartgasabgebenden Stoff auf, in den die erste elektrisch leitfähige Sondeneinrichtung derart eingebracht ist, dass sie sich in einem festgelegten Abstand zu einem Lichtbogenbereich der zugehörigen Lichtbogenkammer umhüllt innerhalb des Bereichs befindet. So lässt sich der Verschleiß einer hartgasabgebenden Überspannungsschutz-Funkenstrecke zuverlässig überwachen.

Gemäß einer weiteren bevorzugten Ausführungsform weist die erste Überspannungsschutz-Funkenstrecke als Verschleißteil in mindestens einem Bereich einen, insbesondere elektrisch leitfähigen, hartgasabgebenden Stoff auf, in dessen Nähe die erste elektrisch leitfähige Sondeneinrichtung derart eingebracht ist, dass sie sich in einem festgelegten Abstand zu einem Lichtbogenbereich der zugehörigen Lichtbogenkammer außerhalb des Bereichs befindet.

Gemäß einer weiteren bevorzugten Ausführungsform weist die erste Überspannungsschutz-Funkenstrecke als Verschleißteil in mindestens einem Bereich einen elektrisch isolierenden Stoff aufweist, in den die erste elektrisch leitfähige Sondeneinrichtung derart eingebracht ist, dass sie sich in einem festgelegten Abstand zu einem Lichtbogenbereich der zugehörigen Lichtbogenkammer umhüllt innerhalb des Bereichs befindet. So lässt sich der Verschleiß einer beliebigen Überspannungsschutz-Funkenstrecke mit einem Isolatorbereich zuverlässig überwachen.

Gemäß einer weiteren bevorzugten Ausführungsform weist die zweite Überspannungsschutz-Funkenstrecke eine erste und eine zweite divergierende Elektrode aufweist, die in einer Löschkammer, welche eine Mehrzahl von parallel angeordneten Löschblechen aufweist, enden, und wobei die zweite elektrisch leitfähige Sondeneinrichtung zwischen zwei benachbarten Löschblechen angeordnet ist oder mit einem Löschblech elektrisch verbunden ist.

Gemäß einer weiteren bevorzugten Ausführungsform weist die zweite Überspannungsschutz-Funkenstrecke in mindestens einem Bereich einen hartgasabgebenden Stoff aufweist, in den die zweite elektrisch leitfähige Sondeneinrichtung derart eingebracht ist, dass sie sich in einem Lichtbogenbereich der zugehörigen Lichtbogenkammer befindet.

Gemäß einer weiteren bevorzugten Ausführungsform weist die zweite Überspannungsschutz-Funkenstrecke eine von einem Isolatorbereich umgebene Lichtbogenkammer auf, in die die zweite leitfähige Sondeneinrichtung durch den Isolatorbereich hindurch eingeführt ist.

Gemäß einer weiteren bevorzugten Ausführungsform weist die Abtrenneinrichtung eine vom Auslösesignal triggerbare Schmelzsicherungseinrichtung aufweist, welche zwischen den ersten Hauptanschluss und den ersten Anschlusskontakt geschaltet ist.

Gemäß einer weiteren bevorzugten Ausführungsform weist die Abtrenneinrichtung eine mechanische Schaltereinrichtung auf, welche zwischen den ersten Hauptanschluss und den ersten Anschlusskontakt geschaltet ist.

Gemäß einer weiteren bevorzugten Ausführungsform weist die Auslöseeinrichtung einen Strombegrenzungswiderstand und eine Indikatorsicherung auf, welche in Reihe in den Strompfad zwischen der ersten elektrisch leitfähigen Sondeneinrichtung und der zweiten elektrisch leitfähigen Sondeneinrichtung geschaltet sind.

### Kurze Beschreibung der Zeichnungen

Es zeigen:
- Fig. 1: ein Schaltungsdiagramm zur Erläuterung einer Überspannungsschutz-Funkenstreckenanordnung gemäß einer ersten Ausführungsform der vorliegenden Erfindung;
- Fig. 2: ein Schaltungsdiagramm zur Erläuterung einer Überspannungsschutz-Funkenstreckenanordnung gemäß einer zweiten Ausführungsform der vorliegenden Erfindung;
- Fig. 3: ein Schaltungsdiagramm zur Erläuterung einer Überspannungsschutz-Funkenstreckenanordnung gemäß einer dritten Ausführungsform der vorliegenden Erfindung;
- Fig. 4: ein Schaltungsdiagramm zur Erläuterung einer Überspannungsschutz-Funkenstreckenanordnung gemäß einer vierten Ausführungsform der vorliegenden Erfindung; und
- Fig. 5: ein Schaltungsdiagramm zur Erläuterung einer Überspannungsschutz-Funkenstreckenanordnung gemäß einer vierten Ausführungsform der vorliegenden Erfindung.

In den Figuren sind gleiche bzw. funktionsgleiche Elemente mit denselben Bezugszeichen versehen.

### Beschreibung der Ausführungsbeispiele

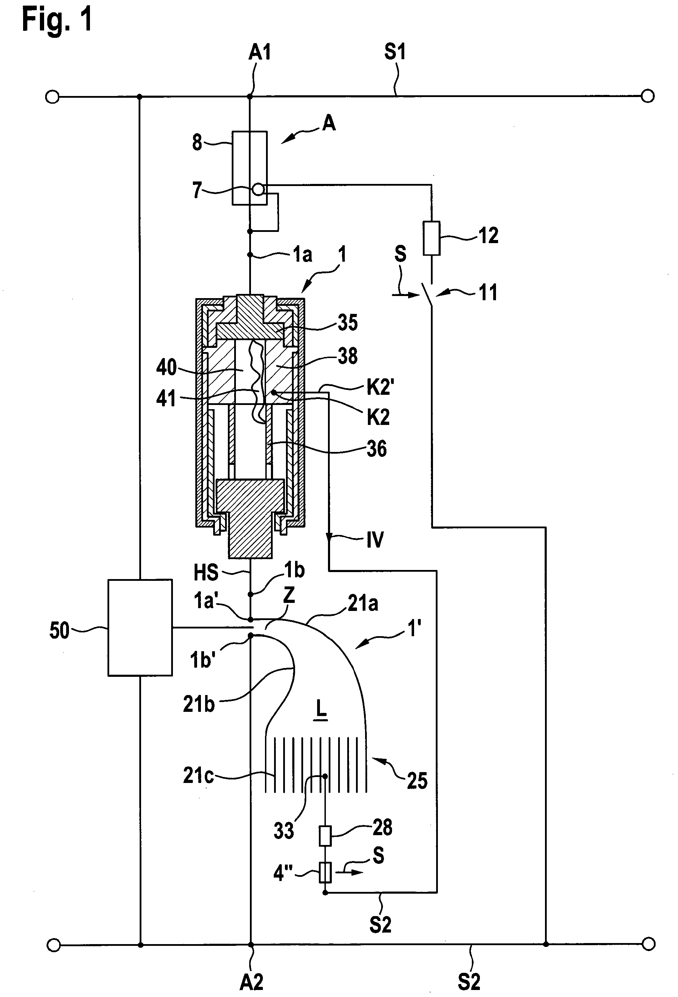

Fig. 1 zeigt ein Schaltungsdiagramm zur Erläuterung einer Überspannungsschutz-Funkenstreckenanordnung gemäß einer ersten Ausführungsform der vorliegenden Erfindung.

In Fig. 1 bezeichnet Bezugszeichen 1 eine erste Überspannungsschutz-Funkenstrecke, welche einen ersten Hauptanschluss 1a und einen zweiten Hauptanschluss 1b aufweist. Bezugszeichen 1' bezeichnet eine zweite Überspannungsschutz-Funkenstrecke, welche einen dritten Hauptanschluss 1a' und einen vierten Hauptanschluss 1b'aufweist.

Der erste Hauptanschluss 1a ist über einen ersten Anschlusskontakt A1 an eine erste Spannungsleitung S1 eines Versorgungsnetzes und der vierte Hauptanschluss 1b' ist über einen zweiten Anschlusskontakt A2 an eine zweite Spannungsleitung S2 des Versorgungsnetzes anschließbar.

Der zweite Hauptanschluss 1b und der dritte Hauptanschluss 1a' sind derart elektrisch miteinander verbunden sind, dass die erste Überspannungsschutz-Funkenstrecke 1 und die zweite Überspannungsschutz-Funkenstrecke 1' in Reihe geschaltet sind.

Die zweite Überspannungsschutz-Funkenstrecke 1' ist bei diesem Ausführungsbeispiel über eine Triggereinrichtung 50 triggerbar, welche zwischen die erste und zweite Spannungsleitung S1, S2 geschaltet ist.

Zwischen dem ersten Hauptanschluss 1a und dem ersten Anschlusskontakt A1 ist eine durch einen Brückenzünder 7 triggerbare Schmelzsicherungseinrichtung 8 angeschlossen. Die inhärente Schmelzfunktion der Schmelzsicherungseinrichtung 8 dient bei diesem Beispiel zu einer Abtrennung der Funkenstreckenanordnung bei Verschleiß bzw. Alterung, wie später beschrieben wird.

Der Brückenzünder 7 ist einerseits mit dem ersten Hauptanschluss 1a verbunden und andererseits über einen Strombegrenzungswiderstand 12 und eine durch ein Auslösesignal S steuerbare Schaltereinrichtung 11 mit der zweiten Spannungsleitung S2 verbindbar.

Die Komponenten 7, 8, 11, 12 bilden somit eine Abtrenneinrichtung A zum Abtrennen des ersten Anschlusskontakts A1 von dem ersten Hauptanschluss 1a.

Die erste Überspannungsschutz-Funkenstrecke 1 entspricht vom Prinzip der aus der DE 10 2005 024 658 B4 bekannten Überspannungsschutz-Funkenstrecke mit Hartgas-Löschung. Zusätzlich weist die erste Überspannungsschutz-Funkenstrecke 1 eine erste elektrisch leitfähige Sondeneinrichtung K2 aufweist, welche in ein elektrisch isolierendes Verschleißteil 38 der ersten Überspannungsschutz-Funkenstrecke 1 derart eingeführt ist, dass bei einem bestimmten Verschleißgrad die erste elektrisch leitfähige Sondeneinrichtung K2 mit einem Lichtbogen 41 in der Lichtbogenkammer 40 zwischen den Hauptelektroden 35, 36 der ersten Überspannungsschutz-Funkenstrecke 1 elektrisch in Kontakt tritt. Extern ist die erste Sondeneinrichtung K2 über eine Anschlussleitung K2' angeschlossen.

Die erste Überspannungsschutz-Funkenstrecke 1 besitzt als Verschleißteil 38 in mindestens einem Bereich einen hartgasabgebenden Stoff, welcher bei Belastung mit einem Lichtbogen durch dessen Abbrand altert. Der Bereich 38 kann beispielsweise aus POM (Polyoxymethylen) bestehen. **In** den Bereich 38 ist
die erste elektrisch leitfähige Sondeneinrichtung K2, beispielsweise ein Draht oder ein elektrisch leitfähiges Band, zunächst derart eingebracht, dass sie sich in einem festgelegten Abstand zum Lichtbogenbereich 41 der Lichtbogenkammer 40 innerhalb des Bereichs 38 befindet und in einem Sandwichaufbau des Bereichs 38 umhüllt vom hartgasabgebenden Stoff angeordnet ist.

Bei einem Abbrand des hartgasabgebenden Materials im Bereich 38 durch den Lichtbogen 41 bis zur ersten elektrisch leitfähigen Sondeneinrichtung K2 tritt diese mit einem Lichtbogen 41 in der ersten Überspannungsschutz-Funkenstrecke 1 elektrisch in Kontakt und greift dessen Potenzial ab.

Bei der zweiten Überspannungsschutz-Funkenstrecke 1' handelt es sich beispielsweise um eine Hörnerfunkenstrecke, wie sie aus der DE 10 2011 051 738 A1 bekannt ist. Insbesondere weist die zweite Überspannungsschutz-Funkenstrecke 1' eine erste und eine zweite divergierende Elektrode 21a, 21b auf. In einem Zündbereich Z ist der Abstand der ersten und zweiten divergierenden Elektrode 21a, 21b gering gehalten, wohingegen sich der Abstand der ersten und zweiten divergierenden Elektrode 21a, 21b in einem Laufbereich L zunehmend verbreitert. Die erste und zweite divergierende Elektrode 21a, 21b enden in einer Löschkammer 25, welche eine Mehrzahl von parallel angeordneten Löschblechen 21c aufweist.

Bei anderen (nicht dargestellten) Ausführungsformen können die Elektroden oder Leitbleche bereits unterhalb der Löschkammer mit einiger Distanz enden. Der Lichtbogen überbrückt dann quasi die Distanz bis zur Löschammer durch Ausdehnung selber.

Die zweite Überspannungsschutz-Funkenstrecke 1' weist eine zweite elektrisch leitfähige Sondeneinrichtung 33 auf, beispielsweise ebenfalls ein Draht oder ein elektrisch leitfähiges Band, welche mit einem Lichtbogen in der zweiten Überspannungsschutz-Funkenstrecke 1' elektrisch in Kontakt tritt. Beim vorliegenden Beispiel ist die zweite elektrisch leitfähige Sondeneinrichtung 33 zwischen zwei benachbarten Löschblechen 21c angeordnet.

Die erste elektrisch leitfähige Sondeneinrichtung K2 und die zweite elektrisch leitfähige Sondeneinrichtung 33 über eine Auslöseeinrichtung 28; 4" elektrisch miteinander verbunden sind, welche vorliegend einen Strombegrenzungswiderstand 28 und eine Indikatorsicherung 4" umfasst.

Die Auslöseeinrichtung 28, 4" ist zum Erfassen eines Stromverlaufs oder eines entsprechenden Anteils des Stromverlaufs im Strompfad IV zwischen der ersten elektrisch leitfähigen Sondeneinrichtung K2 und der zweiten elektrisch leitfähigen Sondeneinrichtung 33 im Falle des Verschleißes des Bereichs 38 der ersten Überspannungsschutz-Finkenstrecke 1 ausgelegt.

Die Auslöseeinrichtung 28; 4" ist derart gestaltet, dass die Indikatorsicherung 4" das Auslösesignal S zum Auslösen der Abtrenneinrichtung A ausgibt, wenn der erfasste Stromverlauf oder der entsprechende Anteil des Stromverlaufs ein vorgegebenes Kriterium erfüllt.

Alle in Fig. 1 dargestellten Komponenten befinden sich vorzugsweise in einem Steckteil eines zweiteilig ausgeführten Gerätes (nicht dargestellt). Die zwei Teile bestehen aus Basisteil (Montage, Anschlusskontaktierung, etc.) und Steckteil (Funkenstrecken).

Die Aufgabe der zweiten Überspannungsschutz-Funkenstrecke 1' besteht in erster Linie darin, den Netzfolgestrom bei "Alterung/Verschleiß zu begrenzen und zu unterbrechen. Dieses Verhalten entspricht einer wesentlichen Funktion von vorgeschalteten Sicherungen bei Installationen nach Stand der Technik. Tritt ein solches Ereignis ein, wird dies mittels der Auslöseeinrichtung 28, 4" detektiert und es wird ein Auslösesignal (elektrisch, mechanisch, ...) A an die nachgelagerte Wirkkette geschickt. Diese Wirkkette setzt letztendlich eine galvanische Trennung mit entsprechender Spannungsfestigkeit zwischen Basisteil und Steckteil um. Dadurch wird die Funkenstreckenanordnung vom Versorgungsnetz getrennt. Die beschriebene Funktionsweise ist durch die charakteristische, zeitliche Koordinierung zwischen den unterschiedlichen Funkenstreckentechnologien realisiert.

Die Technologie überwindet zum einen die nachteiligen Aspekte beim eingangs beschriebenen Stand der Technik und benötigt zum anderen weniger Platz, Zeit und Einzelkomponenten zur Installation. Damit einhergehend wird auch die Wahrscheinlichkeit von Fehlern in der Installation reduziert.

Im regulären Betriebsfall wird die Reihenschaltung der ersten und zweiten Überspannungsschutz-Funkenstrecke 1, 1' bei einem Überspannungsereignis durch die Triggereinrichtung 50 in einen leitfähigen Zustand versetzt. Die erste Überspannungsschutz-Funkenstrecke 1 begrenzt den Netzfolgestrom und löscht, ehe der Lichtbogen in die Löschkammer 25 einlaufen kann. Der Strompfad IV bleibt inaktiv.

Wenn nun die erste Überspannungsschutz-Funkenstrecke 1 die Verschleißgrenze erreicht, kann die sie den
Netzfolgestrom nicht mehr begrenzen, die Sollbruchstelle im Bereich 38 wird aktiviert und die erste Sondeneinrichtung K2 gelangt an elektrisches Potenzial vom Lichtbogen 41.

Da der Netzfolgestrom jedoch weiter fließt/steigt, läuft nun der Lichtbogen in die Löschkammer 25 der zweiten Überspannungsschutz-Funkenstrecke 1'. Dadurch wird in diesem Fall der Netzfolgestrom begrenzt/gelöscht. Damit einhergehend ist die Auslösung des Sonden-Strompfades IV. Der "Weg" über den Sonden-Strompfad IV ist für den Strom/Lichtbogen zunächst am attraktivsten, so dass dieser jedenfalls zum Teil kommutiert und die Auslöseeinrichtung 28, 4" auslöst, so dass die Abtrenneinrichtung A aktiviert wird.

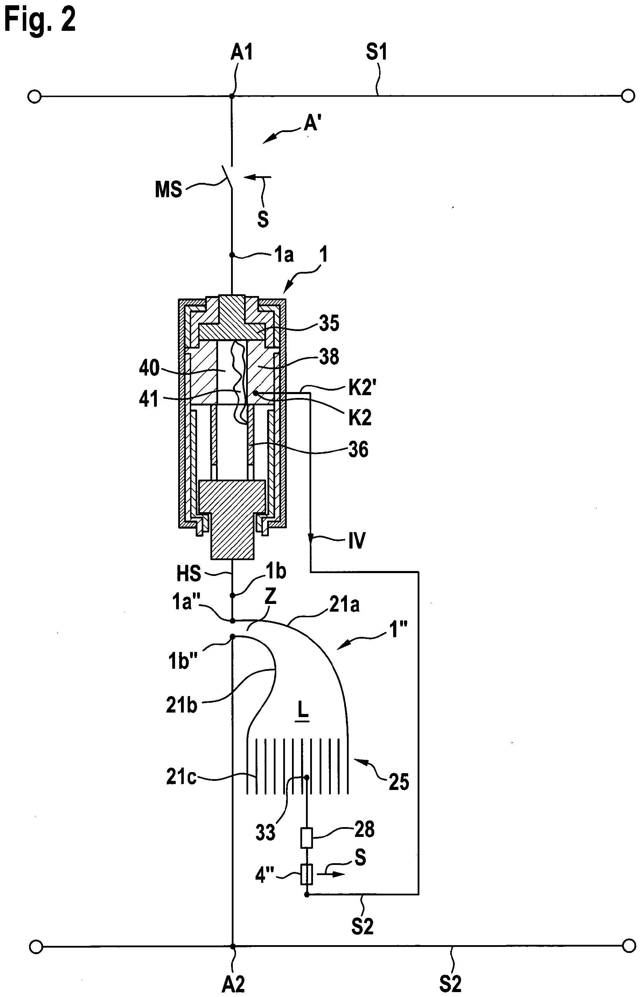

Fig. 2 ist ein Schaltungsdiagramm zur Erläuterung einer Überspannungsschutz-Funkenstreckenanordnung gemäß einer zweiten Ausführungsform der vorliegenden Erfindung.

Die zweite Ausführungsform unterscheidet sich von der ersten Ausführungsform dadurch, dass die zweite Überspannungsschutz-Funkenstrecke 1" mit dem ersten und zweiten Hauptanschluss 1a", 1b" keine Triggerung aufweist. Durch geeignete Dimensionierung ist die Triggereinrichtung 50 verzichtbar und damit die Anzahl der Komponenten weiter reduziert.

Zudem wirkt bei der zweiten Ausführungsform das Auslösesignal S direkt auf eine mechanische Schaltereinrichtung MS, welche anstelle der Schmelzsicherungseinrichtung 8 zwischen den ersten Hauptanschluss 1a und den ersten Anschlusskontakt A1 als Abtrenneinrichtung A' geschaltet ist.

Ansonsten ist die zweite Ausführungsform analog zur ersten Ausführungsform aufgebaut.

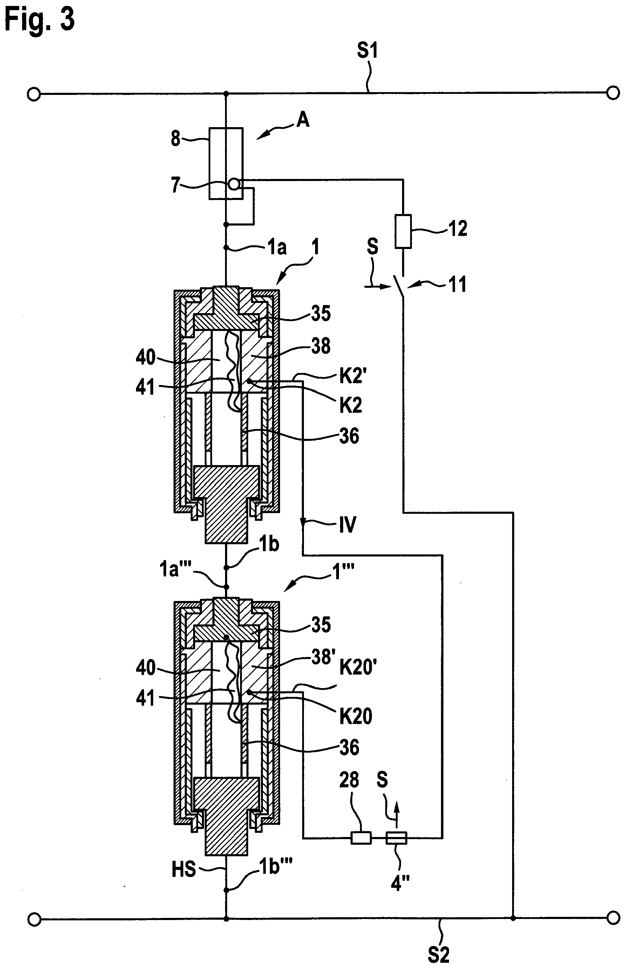

Fig. 3 ist ein Schaltungsdiagramm zur Erläuterung einer Überspannungsschutz-Funkenstreckenanordnung gemäß einer dritten Ausführungsform der vorliegenden Erfindung.

Die dritte Ausführungsform unterscheidet sich von der ersten Ausführungsform dadurch, dass die zweite Überspannungsschutz-Funkenstrecke 1‴ mit dem ersten und zweiten Hauptanschluss 1a‴, 1b‴ keine Hörnerfunkenstrecke ist, sondern ebenfalls eine Überspannungsschutz-Funkenstrecke mit Hartgas-Löschung.

Dabei weist die zweite Überspannungsschutz-Funkenstrecke 1‴ eine zweite elektrisch leitfähige Sondeneinrichtung K20 aufweist, welche in ein elektrisch isolierendes Verschleißteil 38', z.B. aus POM, der zweiten Überspannungsschutz-Funkenstrecke 1‴ derart eingeführt ist, dass sie mit einem Lichtbogen 41 in der Lichtbogenkammer 40 zwischen den Hauptelektroden 35, 36 der zweiten Überspannungsschutz-Funkenstrecke 1‴ elektrisch in Kontakt tritt. Extern ist die zweite Sondeneinrichtung K20 über eine Anschlussleitung K20' angeschlossen. Dabei ist die zweite elektrisch leitfähige Sondeneinrichtung K20 derart tief in den Bereich 38' eingeführt, dass sie stets vom Potenzial des Lichtbogens 41 erreicht wird, um so die UND-Verknüpfung der Alterung der ersten Überspannungsschutz-Funkenstrecke 1 und des Einlaufens des Lichtbogens 41 in die zweite Überspannungsschutz-Funkenstrecke sicher realisieren zu können. Ansonsten entspricht der Aufbau der zweiten elektrisch leitfähigen Sondeneinrichtung K20 dem Aufbau der ersten Sondeneinrichtung K2.

Der Strompfad IV verläuft bei dieser dritten Ausführungsform von der ersten Sondeneinrichtung K2 über die Auslöseeinrichtung 28, 4" zur zweiten Sondeneinrichtung K20.

Ansonsten ist die dritte Ausführungsform analog zur ersten Ausführungsform aufgebaut.

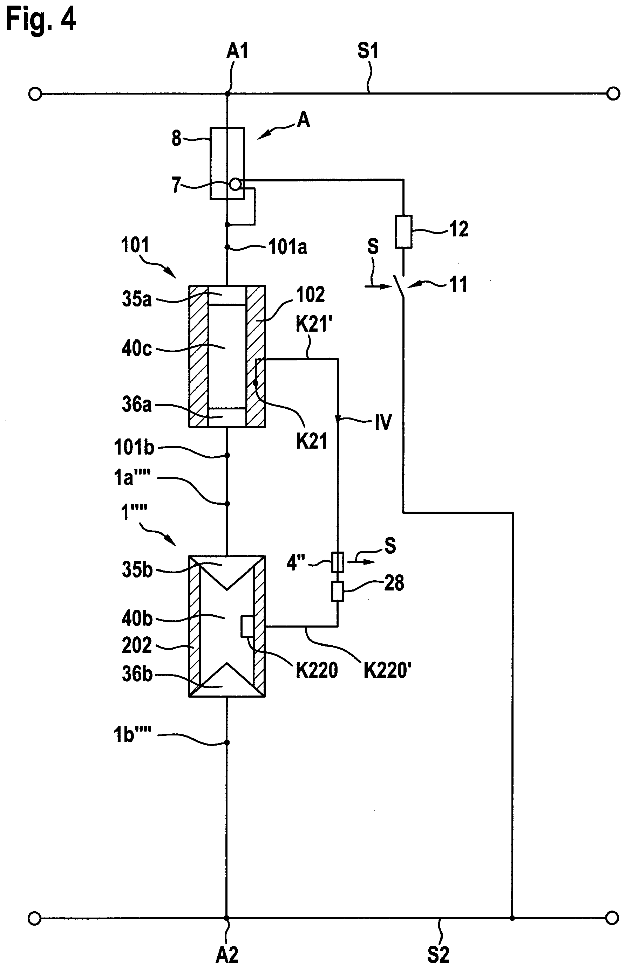

Fig. 4 ist ein Schaltungsdiagramm zur Erläuterung einer Überspannungsschutz-Funkenstreckenanordnung gemäß einer vierten Ausführungsform der vorliegenden Erfindung.

Die vierte Ausführungsform unterscheidet sich von der ersten Ausführungsform dadurch, dass die erste Überspannungsschutz-Funkenstrecke 101 mit dem ersten und zweiten Hauptanschluss 101a, 101b keinen hartgasabgebenden Bereich aufweist, sondern eine von einem Isolatorbereich 102 umgebene Lichtbogenkammer 40a, welche zwischen der ersten und zweiten Hauptelektrode 35a, 36a liegt.

Eingeführt in den Isolatorbereich 102, welcher analog zum hartgasabgebenden Bereich 38 dem Verschleiß unterliegt ist eine erste elektrisch leitfähige Sondeneinrichtung K21, welche extern über eine Anschlussleitung K21' an den Strompfad IV angeschlossen ist.

Die zweite Überspannungsschutz-Funkenstrecke 1ʺʺ mit dem ersten und zweiten Hauptanschluss 1aʺʺ, 1bʺʺ weist ebenfalls eine von einem Isolatorbereich 202 umgebene Lichtbogenkammer 40b auf, welche zwischen der ersten und zweiten Hauptelektrode 35b, 36b liegt.

Eingeführt in die Lichtbogenkammer 40b ist eine zweite leitfähige Sondeneinrichtung K220, welche extern über eine Anschlussleitung K220' an den Strompfad IV angeschlossen ist. Die zweite leitfähige Sondeneinrichtung K220 erfasst somit regelmäßig ein Einlaufen des Lichtbogens in die Lichtbogenkammer 40b.

Ansonsten ist die vierte Ausführungsform analog zur ersten Ausführungsform aufgebaut.

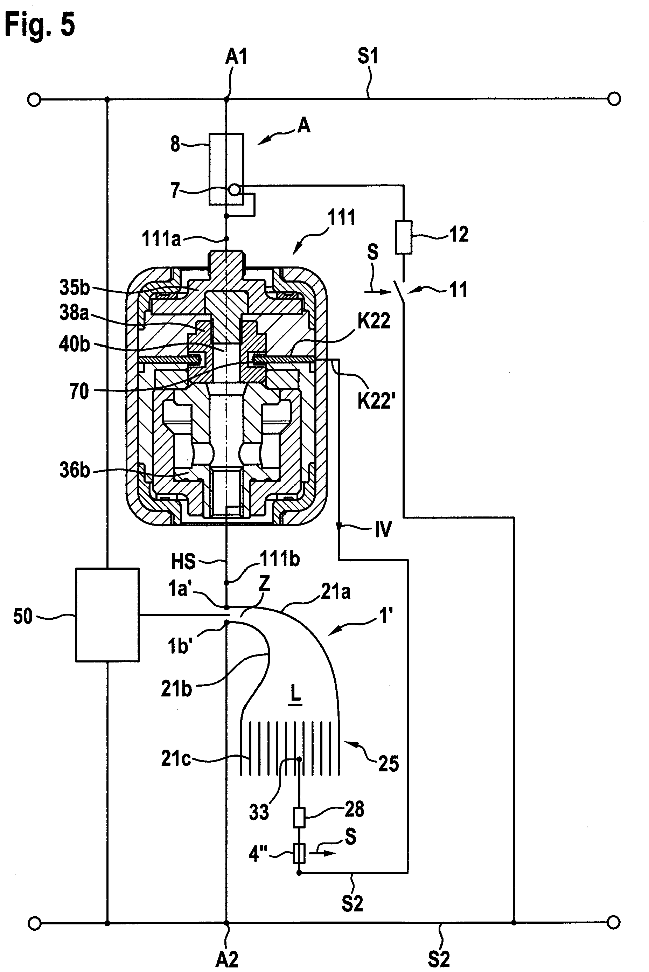

Fig. 5 ist ein Schaltungsdiagramm zur Erläuterung einer Überspannungsschutz-Funkenstreckenanordnung gemäß einer vierten Ausführungsform der vorliegenden Erfindung.

Die fünfte Ausführungsform unterscheidet sich von der ersten Ausführungsform dadurch, dass die erste Überspannungsschutz-Funkenstrecke 111 mit dem ersten und zweiten Hauptanschluss 111a, 111b einen leitfähigen hartgasabgebenden Bereich 38a aufweist, welcher bei Belastung mit einem Lichtbogen durch dessen Abbrand altert. Der Bereich 38a kann beispielsweise aus S-POM (Schwarz-Polyoxymethylen) bestehen. Der leitfähige hartgasabgebende Bereich 38a umgibt die Lichtbogenkammer 40b, welche zwischen der ersten und zweiten Hauptelektrode 35b, 36b liegt.

Durch einen Luftspalt 70 beabstandet eingeführt in den oder in die Nähe neben den leitfähigen hartgasabgebenden Bereich 38a, der dem Verschleiß unterliegt, ist eine erste ringförmige elektrisch leitfähige Sondeneinrichtung K22, welche extern über eine Anschlussleitung K22' an den Strompfad IV angeschlossen ist.

Wenn nun die erste Überspannungsschutz-Funkenstrecke 111 die Verschleißgrenze erreicht und der leitfähige hartgasabgebende Bereich 38a abgebrannt ist, kann die sie den Netzfolgestrom nicht mehr begrenzen, und die erste Sondeneinrichtung K22 gelangt an elektrisches Potenzial vom Lichtbogen.

Ansonsten ist die fünfte Ausführungsform analog zur ersten Ausführungsform aufgebaut.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Insbesondere ist die Erfindung nicht auf die dargestellte Auslöseeinrichtung beschränkt, welche mechanisch die nachgelagerte Wirkkette zur Abtrenneinrichtung auslöst, sondern kann beispielsweise auch rein elektronisch realisiert werden.

Die zweite elektrisch leitfähige Sondeneinrichtung muss nicht zwischen zwei benachbarten Löschblechen angeordnet sin, sondern auch mit einem Löschblech elektrisch verbunden werden.

Die erste elektrisch leitfähige Sondeneinrichtung kann auch bei einem isolierenden hartgasabgebenden Stoff lediglich in dessen Nähe eingebracht werden, so dass sie bei bestimmtem Verschleißgrad vom Lichtbogen der ersten Überspannungsschutz-Funkenstrecke erreicht wird.

## Patentansprüche

1. Überspannungsschutz-Funkenstreckenanordnung, welche aufweist:
eine erste Überspannungsschutz-Funkenstrecke (1; 101; 111), welche einen ersten Hauptanschluss (1a; 101a; 111a) und einen zweiten Hauptanschluss (1b; 101b; 111b) aufweist, und eine zweite Überspannungsschutz-Funkenstrecke (1'; 1"; 1‴; 1ʺʺ), welche einen dritten Hauptanschluss (1a'; 1a"; 1a‴; 1aʺʺ) und einen vierten Hauptanschluss (1b'; 1b"; 1b‴; 1bʺʺ) aufweist;
wobei der erste Hauptanschluss (1a; 101a; 111a) über einen ersten Anschlusskontakt (A1) an eine erste Spannungsleitung (S1) eines Versorgungsnetzes und der vierte Hauptanschluss (1b'; 1b"; 1b‴; 1bʺʺ) über einen zweiten Anschlusskontakt (A2) an eine zweite Spannungsleitung (S2) des Versorgungsnetzes anschließbar ist;
wobei zweite Hauptanschluss (1b; 101b; 111b) und der dritte Hauptanschluss (1a'; 1a"; 1a‴; 1aʺʺ) derart elektrisch miteinander verbunden sind, dass die erste Überspannungsschutz-Funkenstrecke (1; 101; 111) und die zweite Überspannungsschutz-Funkenstrecke (1'; 1"; 1‴; 1ʺʺ) in Reihe geschaltet sind;
wobei
die erste Überspannungsschutz-Funkenstrecke (1; 101; 111) eine erste elektrisch leitfähige Sondeneinrichtung (K2; K21; K22) aufweist, welche in ein oder in die Nähe von einem Verschleißteil (38; 102; 38a) der ersten Überspannungsschutz-Funkenstrecke (1; 101; 111) derart eingeführt ist, dass bei einem bestimmten Verschleißgrad die erste elektrisch leitfähige Sondeneinrichtung (K2; K21; K22) mit einem Lichtbogen (41) in der ersten Überspannungsschutz-Funkenstrecke (1; 101; 111) elektrisch in Kontakt tritt, und wobei die zweite Überspannungsschutz-Funkenstrecke (1'; 1"; 1‴; 1ʺʺ) eine zweite elektrisch leitfähige Sondeneinrichtung (33; K20 K220) aufweist, welche mit einem Lichtbogen in der zweiten Überspannungsschutz-Funkenstrecke (1'; 1"; 1‴; 1ʺʺ) elektrisch in Kontakt tritt;
wobei die erste elektrisch leitfähige Sondeneinrichtung (K2; K21; K22) und die zweite elektrisch leitfähige Sondeneinrichtung (33; K20; K220) über eine Auslöseeinrichtung (28; 4") elektrisch miteinander verbunden sind, welche zum Erfassen eines Stromverlaufs oder eines entsprechenden Anteils des Stromverlaufs im Strompfad (IV) zwischen der ersten elektrisch leitfähigen Sondeneinrichtung (K2; K21; K22) und der zweiten elektrisch leitfähigen Sondeneinrichtung (33; K20; K220) ausgelegt ist;
eine Abtrenneinrichtung (A; 7, 8, 11, 12; A'; MS) zum Abtrennen des ersten Anschlusskontakts (A1) von dem ersten Hauptanschluss (1a; 101a; 111a) und/oder zum Abtrennen des zweiten Anschlusskontakts (A2) von dem vierten Hauptanschluss (1b'; 1b"; 1b‴; 1bʺʺ);
wobei die Auslöseeinrichtung (28; 4") derart gestaltet ist, dass sie ein Auslösesignal (S) zum Auslösen der Abtrenneinrichtung (A; 7, 8, 11, 12) ausgibt, wenn der erfasste Stromverlauf oder der entsprechende Anteil des Stromverlaufs ein vorgegebenes Kriterium erfüllt.

2. Überspannungsschutz-Funkenstreckenanordnung nach Anspruch 1, wobei die erste Überspannungsschutz-Funkenstrecke (1) als Verschleißteil (38) in mindestens einem Bereich einen elektrisch isolierenden hartgasabgebenden Stoff aufweist, in den die erste elektrisch leitfähige Sondeneinrichtung (K2) derart eingebracht ist, dass sie sich in einem festgelegten Abstand zu einem Lichtbogenbereich (41) der zugehörigen Lichtbogenkammer (40) umhüllt innerhalb des Bereichs befindet.

3. Überspannungsschutz-Funkenstreckenanordnung nach Anspruch 1, wobei die erste Überspannungsschutz-Funkenstrecke (1; 111) als Verschleißteil (38a) in mindestens einem Bereich einen, insbesondere elektrisch leitfähigen, hartgasabgebenden Stoff aufweist, in dessen Nähe die erste elektrisch leitfähige Sondeneinrichtung (K22) derart eingebracht ist, dass sie sich in einem festgelegten Abstand zu einem Lichtbogenbereich der zugehörigen Lichtbogenkammer (40b) außerhalb des Bereichs befindet.

4. Überspannungsschutz-Funkenstreckenanordnung nach Anspruch 1, wobei die erste Überspannungsschutz-Funkenstrecke (101) als Verschleißteil (102) in mindestens einem Bereich einen elektrisch isolierenden Stoff aufweist, in den die erste elektrisch leitfähige Sondeneinrichtung (K21) derart eingebracht ist, dass sie sich in einem festgelegten Abstand zu einem Lichtbogenbereich der zugehörigen Lichtbogenkammer (40a) umhüllt innerhalb des Bereichs befindet.

5. Überspannungsschutz-Funkenstreckenanordnung nach einem der vorhergehenden Ansprüche, wobei die zweite Überspannungsschutz-Funkenstrecke (1'; 1") eine erste und eine zweite divergierende Elektrode (21a, 21b) aufweist, die in einer Löschkammer (25), welche eine Mehrzahl von parallel angeordneten Löschblechen (21c) aufweist, enden, und wobei die zweite elektrisch leitfähige Sondeneinrichtung (33) zwischen zwei benachbarten Löschblechen (21c) angeordnet ist oder mit einem Löschblech (21c) elektrisch verbunden ist.

6. Überspannungsschutz-Funkenstreckenanordnung nach einem der Ansprüche 1 bis 4, wobei die zweite Überspannungsschutz-Funkenstrecke (1‴) in mindestens einem Bereich einen hartgasabgebenden Stoff (38') aufweist, in den die zweite elektrisch leitfähige Sondeneinrichtung (K20) derart eingebracht ist, dass sie sich in einem Lichtbogenbereich (41) der zugehörigen Lichtbogenkammer (40) befindet.

7. Überspannungsschutz-Funkenstreckenanordnung nach einem der Ansprüche 1 bis 4, wobei die zweite Überspannungsschutz-Funkenstrecke (1ʺʺ) eine von einem Isolatorbereich (202) umgebene Lichtbogenkammer (40b) aufweist, in die die zweite leitfähige Sondeneinrichtung (K22) durch den Isolatorbereich (202) hindurch eingeführt ist.

8. Überspannungsschutz-Funkenstreckenanordnung nach einem der vorhergehenden Ansprüche, wobei die Abtrenneinrichtung (A) eine vom Auslösesignal (S) triggerbare Schmelzsicherungseinrichtung (8) aufweist, welche zwischen den ersten Hauptanschluss (1a; 101a; 111a) und den ersten Anschlusskontakt (A1) geschaltet ist.

9. Überspannungsschutz-Funkenstreckenanordnung nach einem der Ansprüche 1-7, wobei die Abtrenneinrichtung (A') eine mechanische Schaltereinrichtung (MS) aufweist, welche zwischen den ersten Hauptanschluss (1a; 101a) und den ersten Anschlusskontakt (A1) geschaltet ist.

10. Überspannungsschutz-Funkenstreckenanordnung nach einem der vorhergehenden Ansprüche, wobei die Auslöseeinrichtung (28; 4") einen Strombegrenzungswiderstand (28) und eine Indikatorsicherung (4") aufweist, welche in Reihe in den Strompfad (IV) zwischen der ersten elektrisch leitfähigen Sondeneinrichtung (K2; K21) und der zweiten elektrisch leitfähigen Sondeneinrichtung (33; K20; K220) geschaltet sind.

11. Verfahren zum Betreiben einer Überspannungsschutz-Funkenstreckenanordnung, welche aufweist:
eine erste Überspannungsschutz-Funkenstrecke (1; 101; 111), welche einen ersten Hauptanschluss (1a; 101a; 111a) und einen zweiten Hauptanschluss (1b; 101b; 111b) aufweist;
eine zweite Überspannungsschutz-Funkenstrecke (1'; 1"; 1‴; 1ʺʺ), welche einen dritten Hauptanschluss (1a'; 1a"; 1a‴; 1aʺʺ) und einen vierten Hauptanschluss (1b'; 1b"; 1b‴; 1bʺʺ) aufweist;
wobei der erste Hauptanschluss (1a; 101a; 111a) über einen ersten Anschlusskontakt (A1) an eine erste Spannungsleitung (S1) eines Versorgungsnetzes und der vierte Hauptanschluss (1b'; 1b"; 1b‴; 1bʺʺ) über einen zweiten Anschlusskontakt (A2) an eine zweite Spannungsleitung (S2) des Versorgungsnetzes anschließbar ist;
wobei zweite Hauptanschluss (1b; 101b; 111b) und der dritte Hauptanschluss (1a'; 1a"; 1a‴; 1aʺʺ) derart elektrisch miteinander verbunden sind, dass die erste Überspannungsschutz-Funkenstrecke (1; 101; 111) und die zweite Überspannungsschutz-Funkenstrecke (1'; 1"; 1‴; 1ʺʺ) in Reihe geschaltet sind; wobei das Verfahren folgende Schritte aufweist:
Erfassen eines bestimmten Verschleißgrades der ersten Überspannungsschutz-Funkenstrecke (1; 101; 111) mittels einer ersten elektrisch leitfähigen Sondeneinrichtung (K2; K21; K22), welche in ein oder in die Nähe von einem Verschleißteil (38; 102; 38a) der ersten Überspannungsschutz-Funkenstrecke (1; 101; 111) derart eingeführt ist, dass bei dem bestimmten Verschleißgrad die erste elektrisch leitfähige Sondeneinrichtung (K2; K21; K22) mit einem Lichtbogen (41) in der ersten Überspannungsschutz-Funkenstrecke (1; 101; 111) elektrisch in Kontakt tritt, als ein erstes Kriterium;
Erfassen eines Einlaufens eines Lichtbogens in die zweite Überspannungsschutz-Funkenstrecke (1'; 1"; 1‴; 1ʺʺ) mittels einer zweiten elektrisch leitfähigen Sondeneinrichtung (33; K20; K220), welche mit einem Lichtbogen in der zweiten Überspannungsschutz-Funkenstrecke (1'; 1"; 1‴; 1ʺʺ) elektrisch in Kontakt tritt, als ein zweites Kriterium;
Abtrennen des ersten Anschlusskontakts (A1) von dem ersten Hauptanschluss (1a; 101a) und/oder Abtrennen des zweiten Anschlusskontakts (A2) von dem vierten Hauptanschluss (1b'; 1b"; 1b‴; 1bʺʺ), falls beide vom ersten und zweiten Kriterium erfüllt sind.

12. Verfahren nach Anspruch 11, wobei die erste elektrisch leitfähige Sondeneinrichtung (K2; K21; K22) und die zweite elektrisch leitfähige Sondeneinrichtung (33; K20; K220) in einem gemeinsamen Strompfad (IV) angeordnet sind, weiterhin umfassend die Schritte:
Erfassen eines Stromverlaufs oder eines entsprechenden Anteils des Stromverlaufs in dem Strompfad (IV); und
Betätigen einer Auslöseeinrichtung (28; 4"), die derart gestaltet ist, dass sie ein Auslösesignal (S) zum Auslösen der Abtrenneinrichtung (A; 7, 8, 11, 12) basierend auf dem erfassten Stromverlauf oder auf dem entsprechenden Anteil des Stromverlaufs in dem Strompfad (IV) abgibt.

13. Verfahren nach Anspruch 11 oder 12, wobei die Auslöseeinrichtung (28; 4") eine mechanische und/oder elektrische Wirkkette auslöst.

## Claims

1. Overvoltage protection spark gap arrangement, which comprises:
a first overvoltage protection spark gap (1; 101; 111), which comprises a first main terminal (1a; 101a; 111a) and a second main terminal (1b; 101b; 111b), and a second overvoltage protection spark gap (1'; 1"; 1‴; 1ʺʺ), which comprises a third main terminal (1a'; 1a"; 1a‴; 1aʺʺ) and a fourth main terminal (1b'; 1b"; 1b‴; 1bʺʺ);
wherein the first main terminal (1a; 101a; 111a) can be connected via a first terminal contact (A1) to a first voltage line (S1) of a supply network and the fourth main terminal (1b'; 1b"; 1b‴; 1bʺʺ) can be connected via a second terminal contact (A2) to a second voltage line (S2) of the supply network;
wherein the second main terminal (1b; 101b; 111b) and the third main terminal (1a'; 1a"; 1a‴; 1aʺʺ) are electrically connected to one another in such a manner that the first overvoltage protection spark gap (1; 101; 111) and the second overvoltage protection spark gap (1'; 1"; 1‴; 1ʺʺ) are connected in series;
wherein the first overvoltage protection spark gap (1; 101; 111) comprises a first electrically conductive probe device (K2; K21; K22), which is inserted into or in the vicinity of a wearing part (38; 102; 38a) of the first overvoltage protection spark gap (1; 101; 111) in such a manner that, at a certain degree of wear, the first electrically conductive probe device (K2; K21; K22) makes electrical contact with an arc (41) in the first overvoltage protection spark gap (1; 101; 111), and wherein the second overvoltage protection spark gap (1'; 1"; 1‴; 1ʺʺ) comprises a second electrically conductive probe device (33; K20 K220), which makes electrical contact with an arc in the second overvoltage protection spark gap (1'; 1"; 1‴; 1ʺʺ);
wherein the first electrically conductive probe device (K2; K21; K22) and the second electrically conductive probe device (33; K20; K220) are electrically connected to one another via a triggering device (28; 4"), which is designed to detect a current profile or a corresponding portion of the current profile in the current path (IV) between the first electrically conductive probe device (K2; K21; K22) and the second electrically conductive probe device (33; K20; K220);
a disconnecting device (A; 7, 8, 11, 12; A'; MS) for disconnecting the first terminal contact (A1) from the first main terminal (1a; 101a; 111a) and/or for disconnecting the second terminal contact (A2) from the fourth main terminal (1b'; 1b"; 1b‴; 1bʺʺ);
wherein the triggering device (28; 4") is configured in such a manner that it outputs a triggering signal (S) for triggering the disconnecting device (A; 7, 8, 11, 12) if the detected current profile or the corresponding portion of the current profile meets a predetermined criterion.

2. Overvoltage protection spark gap arrangement according to claim 1, wherein the first overvoltage protection spark gap (1) comprises, as a wearing part (38), in at least one region an electrically insulating hard gas-emitting substance, into which the first electrically conductive probe device (K2) is introduced in such a manner that it is enclosed within the region at a fixed distance from an arc region (41) of the associated arc chamber (40).

3. Overvoltage protection spark gap arrangement according to claim 1, wherein the first overvoltage protection spark gap (1; 111) comprises, as a wearing part (38a), in at least one region, an in particular electrically conductive, hard gas-emitting substance, in the vicinity of which the first electrically conductive probe device (K22) is introduced in such a manner that it is located outside the region at a fixed distance from an arc region of the associated arc chamber (40b).

4. Overvoltage protection spark gap arrangement according to claim 1, wherein the first overvoltage protection spark gap (101) comprises, as a wearing part (102), in at least one region an electrically insulating substance, into which the first electrically conductive probe device (K21) is introduced in such a manner that it is enclosed within the region at a fixed distance from an arc region (41) of the associated arc chamber (40a).

5. Overvoltage protection spark gap arrangement according to one of the preceding claims, wherein the second overvoltage protection spark gap (1'; 1'') comprises a first and a second diverging electrode (21a, 21b), which end in a quenching chamber (25), which comprises a plurality of quenching plates (21c) arranged in parallel, and wherein the second electrically conductive probe device (33) is arranged between two adjacent quenching plates (21c) or is electrically connected to a quenching plate (21c).

6. Overvoltage protection spark gap arrangement according to one of claims 1 to 4, wherein the second overvoltage protection spark gap (1‴) comprises in at least one region a hard gas-emitting substance (38'), into which the second electrically conductive probe device (K20) is introduced in such a manner that it is located in an arc region (41) of the associated arc chamber (40).

7. Overvoltage protection spark gap arrangement according to one of claims 1 to 4, wherein the second overvoltage protection spark gap (1ʺʺ) comprises an arc chamber (40b) which is surrounded by an insulator region (202) and into which the second conductive probe device (K22) is introduced through the insulator region (202).

8. Overvoltage protection spark gap arrangement according to one of the preceding claims, wherein the disconnecting device (A) comprises a fuse device (8) which can be triggered by the triggering signal (S) and is connected between the first main terminal (1a; 101a; 111a) and the first terminal contact (A1).

9. Overvoltage protection spark gap arrangement according to one of claims 1-7, wherein the disconnecting device (A') comprises a mechanical switch device (MS) which is connected between the first main terminal (1a; 101a) and the first terminal contact (A1).

10. Overvoltage protection spark gap arrangement according to one of the preceding claims, wherein the triggering device (28; 4") comprises a current limiting resistor (28) and an indicator fuse (4"), which are connected in series in the current path (IV) between the first electrically conductive probe device (K2; K21) and the second electrically conductive probe device (33; K20; K220).

11. Method for operating an overvoltage protection spark gap arrangement that comprises: a first overvoltage protection spark gap (1; 101; 111), which comprises a first main terminal (1a; 101a; 111a) and a second main terminal (1b; 101b; 111b); a second overvoltage protection spark gap 1'; 1"; 1‴; 1ʺʺ), which comprises a third main terminal (1a'; 1a"; 1a‴; 1aʺʺ) and a fourth main terminal (1b'; 1b"; 1b‴; 1bʺʺ);
wherein the first main terminal (1a; 101a; 111a) can be connected via a first terminal contact (A1) to a first voltage line (S1) of a supply network and the fourth main terminal (1b'; 1b"; 1b‴; 1bʺʺ) can be connected via a second terminal contact (A2) to a second voltage line (S2) of the supply network;
wherein the second main terminal (1b; 101b; 111b) and the third main terminal (1a'; 1a"; 1a‴; 1aʺʺ) are electrically connected to one another in such a manner that the first overvoltage protection spark gap (1; 101; 111) and the second overvoltage protection spark gap (1'; 1"; 1‴; 1ʺʺ) are connected in series;
wherein the method comprises the following steps of:
detecting a specific degree of wear of the first overvoltage protection spark gap (1; 101; 111) by means of a first electrically conductive probe device (K2; K21; K22), which is inserted into or in the vicinity of a wearing part (38; 102; 38a) of the first overvoltage protection spark gap (1; 101; 111) in such a manner that, at a certain degree of wear, the first electrically conductive probe device (K2; K21; K22) makes electrical contact with an arc (41) in the first overvoltage protection spark gap (1; 101; 111) as a first criterion;
detecting an entry of an arc into the second overvoltage protection spark gap (1'; 1"; 1‴; 1ʺʺ) by means of a second electrically conductive probe device (33; K20; K220), which comes into electrical contact with an arc in the second overvoltage protection spark gap (1'; 1"; 1‴; 1ʺʺ), as a second criterion;
disconnecting the first terminal contact (A1) from the first main terminal (1a; 101a) and/or disconnecting the second terminal contact (A2) from the fourth main terminal (1b'; 1b"; 1b‴; 1bʺʺ) if both of the first and second criteria are met.

12. Method according to claim 11, wherein the first electrically conductive probe device (K2; K21; K22) and the second electrically conductive probe device (33; K20; K220) are arranged in a common current path (IV), further comprising the steps of:
detecting a current profile or a corresponding portion of the current profile in the current path (IV); and
actuating a triggering device (28; 4") that is configured in such a manner that it outputs a triggering signal (S) for triggering the disconnecting device (A; 7, 8, 11, 12) based on the detected current profile or the corresponding portion of the current profile in the current path (IV).

13. Method according to claim 11 or 12, wherein the triggering device (28; 4") triggers a mechanical and/or electrical active chain.

## Revendications

1. Ensemble d'éclateurs de protection contre les surtensions qui comporte :
un premier éclateur de protection contre les surtensions (1 ; 101 ; 111) qui comporte une première borne principale (1a ; 101a ; 111a) et une deuxième borne principale (1b ; 101b ; 111b), et un second éclateur de protection contre les surtensions (1' ; 1" ; 1‴ ; 1ʺʺ) qui comporte une troisième borne principale (1a' ; 1a" ; 1a‴ ; 1aʺʺ) et une quatrième borne principale (1b' ; 1b" ; 1b‴ ; 1bʺʺ) ;
dans lequel la première borne principale (1a ; 101a ; 111a) peut être connectée à une première ligne de tension (S1) d'un réseau d'alimentation par l'intermédiaire d'un premier contact de borne (A1) et la quatrième borne principale (1b' ; 1b" ; 1b‴ ; 1bʺʺ) peut être connectée à une seconde ligne de tension (S2) du réseau d'alimentation par l'intermédiaire d'un second contact de borne (A2) ;
dans lequel la deuxième borne principale (1b; 101b; 111b) et la troisième borne principale (1a' ; 1a" ; 1a‴ ; 1a‴‴) sont électriquement connectées l'une à l'autre de telle sorte que le premier éclateur de protection contre les surtensions (1 ; 101 ; 111) et le second éclateur de protection contre les surtensions (1' ; 1" ; 1‴ ; 1ʺʺ) sont connectés en série ;
dans lequel le premier éclateur de protection contre les surtensions (1 ; 101 ; 111) comporte un premier dispositif de sonde électriquement conducteur (K2 ; K21 ; K22) qui est introduit dans ou à proximité d'une pièce d'usure (38 ; 102 ; 38a) du premier éclateur de protection contre les surtensions (1 ; 101 ; 111) de telle sorte que, dans le cas d'un degré d'usure spécifique, le premier dispositif de sonde électriquement conducteur (K2 ; K21 ; K22) vient électriquement en contact avec un arc (41) dans le premier éclateur de protection contre les surtensions (1 ; 101 ; 111), et dans lequel le second éclateur de protection contre les surtensions (1' ; 1" ; 1‴ ; 1ʺʺ) comporte un second dispositif de sonde électriquement conducteur (33 ; K20 ; K220) qui vient électriquement en contact avec un arc dans le second éclateur de protection contre les surtensions (1' ; 1" ; 1‴ ; 1ʺʺ) ;
dans lequel le premier dispositif de sonde électriquement conducteur (K2 ; K21 ; K22) et le second dispositif de sonde électriquement conducteur (33 ; K20 ; K220) sont électriquement connectés l'un à l'autre par l'intermédiaire d'un dispositif d'activation (28 ; 4") qui est conçu pour détecter une variation de courant ou une portion correspondante de la variation de courant dans le circuit de courant (IV) entre le premier dispositif de sonde électriquement conducteur (K2 ; K21 ; K22) et le second dispositif de sonde électriquement conducteur (33 ; K20 ; K220) ;
un dispositif de séparation (A ; 7, 8, 11, 12 ; A' ; MS) pour séparer le premier contact de borne (A1) de la première borne principale (1a ; 101a ; 111a) et/ou pour séparer le second contact de borne (A2) de la quatrième borne principale (1b' ; 1b'' ; 1b‴ ; 1bʺʺ) ;
dans lequel le dispositif d'activation (28 ; 4") est configuré de telle sorte qu'il délivre un signal d'activation (S) pour activer le dispositif de séparation (A ; 7, 8, 11, 12) lorsque la variation de courant détectée ou la portion correspondante de la variation de courant satisfait à un critère prédéfini.

2. Ensemble d'éclateurs de protection contre les surtensions selon la revendication 1, dans lequel le premier éclateur de protection contre les surtensions (1) comporte un matériau dur émetteur de gaz et électriquement isolant, en tant que pièce d'usure (38) dans au moins une zone, dans lequel le premier dispositif de sonde électriquement conducteur (K2) est inséré de telle sorte qu'il est à une distance fixe d'une zone d'arc (41) de la chambre d'arc (40) associée, enveloppé à l'intérieur de la zone.

3. Ensemble d'éclateurs de protection contre les surtensions selon la revendication 1, dans lequel le premier éclateur de protection contre les surtensions (1 ; 111) comporte un matériau dur émetteur de gaz, en particulier électriquement conducteur, en tant que pièce d'usure (38a) dans au moins une zone, à proximité duquel le premier dispositif de sonde électriquement conducteur (K22) est inséré de telle sorte qu'il se trouve à une distance fixe d'une zone d'arc de la chambre d'arc (40b) associée à l'extérieur de la zone.

4. Ensemble d'éclateurs de protection contre les surtensions selon la revendication 1, dans lequel le premier éclateur de protection contre les surtensions (101) comporte un matériau électriquement isolant en tant que pièce d'usure (102) dans au moins une zone, dans lequel le premier dispositif de sonde électriquement conducteur (K21) est inséré de telle sorte qu'il est à une distance fixe d'une zone d'arc de la chambre d'arc (40a) associée, enveloppé à l'intérieur de la zone.

5. Ensemble d'éclateurs de protection contre les surtensions selon l'une des revendications précédentes, dans lequel le second éclateur de protection contre les surtensions (1' ; 1") comporte une première électrode et une seconde électrode (21a, 21b) divergentes qui se terminent dans une chambre d'extinction (25) qui comporte une pluralité de plaques d'extinction (21c) agencées parallèlement, et dans lequel le second dispositif de sonde électriquement conducteur (33) est agencé entre deux plaques d'extinction (25c) adjacentes ou est électriquement connecté à une plaque d'extinction (21c).

6. Ensemble d'éclateurs de protection contre les surtensions selon l'une des revendications 1 à 4, dans lequel le second éclateur de protection contre les surtensions (1‴) comporte un matériau dur émetteur de gaz (38') dans au moins une zone, dans lequel le second dispositif de sonde électriquement conducteur (K20) est inséré de telle sorte qu'il se trouve dans une zone d'arc (41) de la chambre d'arc (40) associée.

7. Ensemble d'éclateurs de protection contre les surtensions selon l'une des revendications 1 à 4, dans lequel le second éclateur de protection contre les surtensions (1ʺʺ) comporte une chambre d'arc (40b) entourée par une zone d'isolement (202), dans laquelle le second dispositif de sonde conducteur (K22) est introduit à travers la zone d'isolement (202).

8. Ensemble d'éclateurs de protection contre les surtensions selon l'une des revendications précédentes, dans lequel le dispositif de séparation (A) comporte un dispositif de fusible de protection (8) pouvant être déclenché par le signal d'activation (S), lequel dispositif de fusible de protection est connecté entre la première borne principale (1a ; 101a ; 111a) et le premier contact de borne (A1).

9. Ensemble d'éclateurs de protection contre les surtensions selon l'une des revendications 1 à 7, dans lequel le dispositif de séparation (A') comporte un dispositif de commutation mécanique (MS) qui est connecté entre la première borne principale (1a ; 101a) et le premier contact de borne (A1).

10. Ensemble d'éclateurs de protection contre les surtensions selon l'une des revendications précédentes, dans lequel le dispositif d'activation (28 ; 4") comporte une résistance de limitation de courant (28) et un fusible d'indicateur (4") qui sont connectés en série dans le circuit de courant (IV) entre le premier dispositif de sonde électriquement conducteur (K2 ; K21) et le second dispositif de sonde électriquement conducteur (33 ; K20 ; K220).

11. Procédé pour faire fonctionner un ensemble d'éclateurs de protection contre les surtension qui comporte :
un premier éclateur de protection contre les surtensions (1 ; 101 ; 111) qui comporte une première borne principale (1a ; 101a ; 111a) et une deuxième borne principale (1b ; 101b ; 111b) ;
un second éclateur de protection contre les surtensions (1' ; 17" ; 1‴ ; 1ʺʺ) qui comporte une troisième borne principale (1a' ; 1a" ; 1a‴ ; 1aʺʺ) et une quatrième borne principale (1b' ; 1b" ; 1b‴ ; 1bʺʺ) ;
dans lequel la première borne principale (1a ; 101a ; 111a) peut être connectée à une première ligne de tension (S1) d'un réseau d'alimentation par l'intermédiaire d'un premier contact de borne (A1) et la quatrième borne principale (1b' ; 1b" ; 1b‴ ; 1bʺʺ) peut être connectée à une seconde ligne de tension (S2) du réseau d'alimentation par l'intermédiaire d'un second contact de borne (A2) ;
dans lequel la deuxième borne principale (1b; 101b; 111b) et la troisième borne principale (1a' ; 1a" ; 1a‴ ; 1a‴‴) sont électriquement connectées l'une à l'autre de telle sorte que le premier éclateur de protection contre les surtensions (1 ; 101 ; 111) et le second éclateur de protection contre les surtensions (1' ; 1" ; 1‴ ; 1ʺʺ) sont connectés en série ;
dans lequel le procédé comporte les étapes suivantes de :
détecter un degré d'usure spécifique du premier éclateur de protection contre les surtensions (1 ; 101 ; 111) au moyen d'un premier dispositif de sonde électriquement conducteur (K2 ; K21 ; K22) qui est introduit dans ou à proximité d'une pièce d'usure (38 ; 102 ; 38a) du premier éclateur de protection contre les surtensions (1 ; 101 ; 111) de telle sorte que, dans le cas du degré d'usure spécifique, le premier dispositif de sonde électriquement conducteur (K2 ; K21 ; K22) vient en contact électrique avec un arc (41) dans le premier éclateur de protection contre les surtensions (1 ; 101 ; 111), en tant que premier critère ;
détecter une entrée d'un arc dans le second éclateur de protection contre les surtensions (1' ; 1" ; 1‴ ; 1ʺʺ) au moyen d'un second dispositif de sonde électriquement conducteur (33 ; K20 ; K220) qui vient électriquement en contact avec un arc dans le second éclateur de protection contre les surtensions (1' ; 1" ; 1‴ ; 1ʺʺ), en tant que second critère ;
séparer le premier contact de borne (A1) de la première borne principale (1a ; 101a) et/ou séparer le second contact de borne (A2) de la quatrième borne principale (1b' ; 1b" ; 1b‴ ; 1bʺʺ), si le premier critère et le second critère sont tous deux satisfaits.

12. Procédé selon la revendication 11, dans lequel le premier dispositif de sonde électriquement conducteur (K2 ; K21 ; K22) et le second dispositif de sonde électriquement conducteur (33 ; K20 ; K220) sont agencés dans un circuit de courant (IV) commun, comprenant en outre les étapes de :
détecter une variation de courant ou une portion correspondante de la variation de courant dans le circuit de courant (IV) ; et
actionner un déclencheur (28 ; 4") qui est configuré de telle sorte qu'il délivre un signal d'activation (S) pour déclencher le dispositif de séparation (A ; 7, 8, 11, 12) sur la base de la variation de courant détectée ou de la portion correspondante de la variation de courant dans le circuit de courant (IV).

13. Procédé selon la revendication 11 ou 12, dans lequel le dispositif d'activation (28 ; 4") active une chaîne d'action mécanique et/ou électrique.
